**Europäisches Patentamt**

**European Patent Office**

**Office européen des brevets**

(11) Veröffentlichungsnummer: **0 289 926**

**A2**

## EUROPÄISCHE PATENTANMELDUNG

(21) Anmeldenummer: **88106709.4**

(22) Anmeldetag: **27.04.88**

(51) Int. Cl.4: **C08L 25/06 , C08L 23/02**

(30) Priorität: **06.05.87 DE 3715036**

(43) Veröffentlichungstag der Anmeldung:
**09.11.88 Patentblatt 88/45**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Hoenl, Hans, Dr.**
**Hauptstrasse 69a**
**D-6719 Obersuelzen(DE)**
Erfinder: **Matern, Ruediger**
**Uferstrasse 5**
**D-6804 Ilvesheim(DE)**
Erfinder: **Steinberg, Guenther**
**Meininger Weg 11**
**D-6800 Mannheim 31(DE)**
Erfinder: **Moedersheim, Norbert**
**Taunusstrasse 3**
**D-6710 Frankenthal(DE)**
Erfinder: **Jenne, Helmut, Dr.**
**Grosser Moench 6**
**D-6905 Schriesheim(DE)**

(54) **Thermoplastische Formmasse, Verwendung derselben zur Herstellung von Formteilen und Formteile daraus.**

(57) Die Erfindung betrifft eine thermoplastische Formmasse, enthaltend, jeweils bezogen auf die Formmasse aus A + B + C,

A 30 bis 60 Gew.-% mindestens eines Styrol oder eines substituiertes Styrol enthaltenden Polymerisates

B 30 bis 60 Gew.-% mindestens eines Homo-oder Copolymerisates eines $\alpha$-Olefinmonomeren

C 2 bis 20 Gew.-% mindestens eines Styrol und Butadien oder Isopren enthaltenden Blockcopolymerisates, das gegebenenfalls selektiv hydriert sein kann.

Charakteristisch ist, daß die Komponente B zusätzlich 5 bis 60 Gew.-%, bezogen auf B, Talkum als Füllstoff enthält.

## Thermoplastische Formmasse, Verwendung derselben zur Herstellung von Formteilen und Formteile daraus

Die Erfindung betrifft eine thermoplastische Formmasse, enthaltend, jeweils bezogen auf die Formmasse aus A + B + C,

A 30 bis 60 Gew.-% mindestens eines Styrol oder eines substituiertes Styrol enthaltenden Polymerisates

B 30 bis 60 Gew.-% mindestens eines Homo-oder Copolymerisates eines α-Olefinmonomeren und

C 2 bis 20 Gew.-% mindestens eines Styrol und Butadien oder Isopren enthaltenden Blockcopolymerisates, das gegebenenfalls selektiv hydriert sein kann.

Zum Stand der Technik nennen wir:

(1) EP 00 42 153

(2) EP 00 04 685 und

(3) DE-AS-20 61 361

(4) deutsche Patentanmeldung P 36 20 008.5 - O.Z. 0050/38495.

Formmassen aus Polystyrol und Polyolefinen sind seit längerem bekannt. Sie finden vor allem im Verpackungssektor Anwendung. Es ist ferner bekannt, für diese Stoffe als Mischungsvermittler Styrol-Isopren-zwei-Blockcopolymerisate [(vgl. (1))] zu verwenden. Auch hydrierte Styrol-Butadien-Styrol-Drei-Blockcopolymerisate [vgl. (2))] werden als mischungsvermittelnde Zusätze beansprucht. Schließlich ist aus (3) die Verwendung hydrierter Styrol-Butadien-Zwei-Blockcopolymerisate als Mischungsvermittler bekannt. In (4) wird für diesen Zweck ein Blockcopolymerisat beschrieben, das einen Gesamtstyrolgehalt im Bereich von 40 bis 60 Gew.-%, bezogen auf das Blockcopolymerisat, aufweist und wobei 5 bis 25 Gew.-% des Blockcopolymerisates als Blockpolystyrol vorliegen und der Rest des Styrols in 60 bis 40 Gew.-% Butadien statistisch eingebaut vorliegt. Das Blockcopolymerisat weist dabei ein mittleres Molekulargewicht (Gewichtsmittel) von 50.000 bis 200.000 auf.

Die vorstehend beschriebenen Mischungen haben aber immer noch Nachteile in Bezug auf Steifigkeit. Wärmeformbeständigkeit und Verarbeitungsschwindung.

Andererseits ist mit Talkum gefülltes PE oder PP bekannt. Die Verarbeitbarkeit derart gefüllter Polyolefine ist, jedoch insbesondere beim Thermoformen, einer für PS, PVC und ABS gängigen Methode zum Tiefziehen, schwierig.

Es bestand die Aufgabe, für Lebensmittelverpackungen Formmassen zu entwickeln, die hinsichtlich der genannten Eigenschaften Verbesserungen aufweisen sollen. Weiterhin sollte die Verarbeitbarkeit beim Tiefziehen besser sein als bei mit Talkum gefülltem Polypropylen.

Diese Aufgabe wird gelöst durch eine Formmasse gemäß Anspruch 1.

Thermoplastische Formmasse, enthaltend, jeweils bezogen auf die Formmasse aus A + B + C,

A 30 bis 60 Gew.-% mindestens eines Styrol oder eines substituiertes Styrol enthaltenden Polymerisates

B 30 bis 60 Gew.-% mindestens eines Homo-oder Copolymerisates eines α-Olefinmonomeren und

C 2 bis 20 Gew.-% mindestens eines Styrol und Butadien oder Isopren enthaltenden Blockcopolymerisates, das gegebenenfalls selektiv hydriert sein kann.

Die Formmasse ist dadurch gekennzeichnet, daß die Komponente B zusätzlich 5 bis 60 Gew.-%, bezogen auf B. Talkum als Füllstoff enthält.

Nachstehend werden der Aufbau der erfindungsgemäßen Formmasse aus den Komponenten, die Herstellung der Komponenten und die der Formmasse beschrieben.

Die Formmasse enthält die Komponenten A, B und C; vorzugsweise besteht sie aus diesen. Ferner kann die Formmasse als Komponente D übliche Zusatzstoffe enthalten.

Bezogen auf die Formmasse aus A + B + C enthält sie:

A: 30 bis 60 Gew.-%, vorzugsweise 35 bis 55 Gew.-%

B: 30 bis 60 Gew.-%, vorzugsweise 35 bis 55 Gew.-%

C: 2 bis 20 Gew.-%, vorzugsweise 4 bis 14 Gew.-%.

Bezogen auf 100 Gew.-Teile A + B + C, können noch zugegen sein: D: 0,05 bis 25 Gew.-Teile, insbesondere 0,1 bis 10 Gew.-Teile.

Komponente A

Als Komponente A der erfindungsgemäßen Formmasse kommen Homopolymerisate oder Copolymerisate von Styrol mit einem der eng verwandten insbesondere methylsubstituierten Styrole in Frage, in denen ein Methylrest als Substituent am aromatischen Ring oder an der Seitenkette vorhanden ist. Hier ist vor allem p-Methylstyrol zu erwähnen. Diese Copolymerisate können aus Styrol bzw. substituiertem Styrol in an sich bekannter Weise hergestellt werden. Als Styrolpolymerisate kommen ferner Pfropfmischpolymerisate in Frage, die durch Polymerisation von Styrol oder substituiertem Styrol in Gegenwart eines Kautschuks, z.B. eines Butadienpolymerisates oder kautschukartigen Styrol/Butadien-Polymerisats, hergestellt werden. Der Polybutadiengehalt kann 3 bis 20 Gew.-%, vorzugsweise 5 bis 12 Gew.-%, bezogen auf A, betragen. Der mit Styrol gepfropfte Kautschuk (Weichphase) liegt dabei fein dispergiert in einer als Hartmatrix bezeichneten Polystyrolphase vor. Die Herstellung derartiger schlagfester Polystyrole ist dem Fachmann bekannt. Polystyrole und Polymerisate substituierter Styrole sind, ebenso wie die schlagfesten Polystyrole, im Handel erhältlich. Die Viskositätszahl der Komponente A soll im Bereich von 60 bis 120 ml/g liegen (0,5 %-ig in Toluol bei 23°C).

Komponente B

Als Komponente B wird eine Mischung aus einem Kunststoff und einem Füllstoff eingesetzt. Vorzugsweise handelt es sich bei dem Kunststoff um ein Homo-oder Copolymerisat eines α-Olefins. Als Homo-oder Copolymerisate von α-Olefinmonomeren kommen die des Ethylens und Propylens in Frage. Es seien genannt Polyethylen von hoher Dichte (Bereich 0,94 bis 0,97 g/cm$^3$) mit Schmelzflußindices (gemessen BS 2782, Teil 105 C) von 0,001 bis 2,0 dg/Minute oder die Copolymerisate von Ethylen und geringen Mengen (ca. 10 %) Propylen. Die Herstellung derartiger Produkte ist bekannt.

Bevorzugt werden ausschließlich jedoch die isoataktischen Polypropylene angewendet, die nach dem Gasphasenverfahren der BASF unter Verwendung von Ziegler-Natta-Katalysatoren hergestellt werden und die Schmelzindices im Bereich von 0,1 bis 90,0 g/10 Min. (MFI 190/5) aufweisen können. Besonders bevorzugt sind dabei solche Produkte, deren ataktischer Anteil zwischen 0,1 und 20 Gew.-% liegt (gemessen als xylollöslicher Anteil unter Standardbedingungen).

Der Füllstoff der Komponente B ist in Anteilen von 5 bis 60 Gew.-%, vorzugsweise von 20 1 bis 50 Gew.-%, bezogen auf B, enthalten.

Wesentlich ist, daß die Komponente B als Füllstoff Talkum enthält. Unter Talkum im Sinne der vorliegenden Erfindung soll ein kristalliner Talkum verstanden werden, dessen mittlere Korngröße 5 - 20 μm, vorzugsweise 10 - 15 μm beträgt. Die chemische Zusammensetzung kann liegen im Bereich von

50 - 70 Gew.-% $SiO_2$
20 - 40 Gew.-% $MgO$
0,5 - 1,5 Gew.-% $Fe_2O_3$
0,5 - 1,5 Gew.-% $Al_2O_3$ und
0,4 - 1,2 Gew.-% $CaO$.
Der Glühverlust kann 1 bis 7 Gew.-% betragen.

Der erfindungsgemäß verwendete feinteilige Talk kann oberflächenbehandelt sein. In Frage kommen hier die üblichen Haftvermittler auf Silan-, Chrom-oder Titanbasis; aber auch Beschichtungen mit verträglich machenden Verbindungen wie Stearaten, Wachsen oder Polymeren, die zur Filmbildung geeignet sind, sind möglich. Vorzugsweise wird jedoch ein oberflächenunbehandelter Talk eingesetzt.

Solche Kunststoff-Füllstoff-Mischungen lassen sich auf übliche Art und Weise durch gemeinsames Extrudieren, Kneten oder Verwalzen der Ausgangskomponenten bei höheren Temperaturen herstellen. Polypropylen-Talkum-Mischungen sind z.B. als BASF-Produkte kommerziell erhältlich.

Komponente C

Unter Komponente C sind Styrol und Butadien oder Isopren enthaltende Blockcopolymere zu verstehen. Das Blockcopolymere kann nach dessen Herstellung noch selektiv hydriert sein. Solche Blockcopolymere sind kommerziell z.B. in Form der ®Cariflex TR-, ®Kraton-oder ®Finaprene-Typen erhältlich.

Genannt seien z.B. lineare Blockcopolymerisate mit scharfem oder verschmiertem Übergang, wobei 2 oder mehr Blöcke von Styrol und/oder Dien vorhanden sein können. Außerdem geeignet sind die sternförmig verzweigten Blockcopolymerisate mit mono-oder polymodalem Aufbau. Bezüglich der Einzelheiten sei auf die DE-OS 26 60 068 verwiesen, in der eine Reihe von verzweigten Blockcopolymerisaten, deren Herstellung, Molgewichte Selektivhydrierung etc. mit Fundstellen beschrieben ist. Die genannten Blockcopolymerisate sind in der Regel aus ca. 20-95 Gew.-% Styrol und 80 - 5 Gew.-% Dien aufgebaut und umfassen somit sowohl der thermoplastischen Massen als auch die thermoplastischen Elastomeren (vgl. auch DE-OS 25 50 226, DE-OS 25 50 227 und DE-OS 19 59 922).

Die Komponente C stellt vorzugsweise ein lineares aus Styrol und Butadien bestehendes Blockcopolymerisat dar, das in an sich bekannter Weise selektiv hydriert worden ist, wobei lediglich die von Monomerenbaustein Butadien herrührenden Doppelbindungen zu mehr als 90 %, insbesondere mehr als 97 % abgesättigt werden. Derartige Verfahren zur Hydrierung sind an sich bekannt und können z.B. nach dem in DE-OS 27 48 884 beschriebenen Verfahren durchgeführt werden.

Wesentlich für den Aufbau des bevorzugten Blockcopolymerisates vor der Hydrierung ist, daß der Gesamtstyrolgehalt des Blockcopolymerisates im Bereich von 40 bis 60 Gew.-%, vorzugsweise 50 bis 55 Gew.-%, bezogen auf C, liegt und daß 5 bis 25 Gew.-% des Blockcopolymerisates C als Blockpolystyrol vorliegen und der Rest des Styrols in 60 bis 40 Gew.-%, vorzugsweise 50 bis 45 Gew.-% Butadien statistisch eingebaut vorliegt, wobei das Blockcopolymerisat C ein mittleres Molekulargewicht (Gewichtsmittel) von 50.000 bis 200.000, vorzugsweise 75.000 bis 150.000, aufweisr.

Die Herstellung derartiger Blockcopolymerisate ist an sich bekannt und erfolgt durch anionische Polymerisation von Mischungen aus Butadien und Styrol in Gegenwart von Li-alkylinitiatoren und von THF. Sie können z.B. nach dem in der DE-OS 31 06 959 beschriebenen Verfahren hergestellt werden, wobei insbesondere adiabatisch in einer Verfahrensstufe gearbeitet wird (Beispiel 2).

Komponente D

Die erfindungsgemäße Formmasse kann als Komponente D Zusatzstoffe enthalten, die für die Komponenten A, B und C typisch und gebräuchlich sind. Als solche Zusatzstoffe seien beispielsweise genannt: Füllstoffe, außer Talkum, Farbstoffe, Pigmente, Antistatika, Antioxidantien, auch Flammschutzmittel und insbesondere die Schmiermittel, die für die Weiterverarbeitung der Formmasse, z.B. bei der Herstellung von Formkörpern bzw. Formteilen, erforderlich sind.

Herstellung der Formmasse

Die Herstellung der Formmasse erfolgt durch Mischen der Komponenten A, B, C und gegebenenfalls D nach allen bekannten Methoden. Vorzugsweise geschieht jedoch das Mischen der Komponenten A, B und C durch gemeinsames Extrudieren, Kneten oder Verwalzen der Komponenten bei höheren Temperaturen, z.B. in der Schmelze, in einem Ein-oder Zweiwellenextruder. Die erfindungsgemäße Formmasse kann nach den bekannten Verfahren der Thermoplastverarbeitung verarbeitet werden, also z. B. durch Extrudieren, Spritzgießen, Kalandrieren, Hohlkörperblasen, Pressen oder Sintern: besonders bevorzugt werden aus den nach dem erfindungsgemäßen Verfahren hergestellten Formmassen Folien durch Extrusion nach dem Thermoformverfahren hergestellt.

Die in der vorliegenden Anmeldung beschriebenen Parameter werden wie folgt bestimmt:

1. Elastizitätsmodul, EM, nach DIN 53 457 in ($N/mm^2$)
2. Vicat-Erweichungstemperatur, VST B, nach DIN 53 460 in (°C)
3. Verarbeitungsschwindung, VS, nach DIN 16 901 in (%)

Für die Herstellung von erfindungsgemäßen Formmassen und von Vergleichsmassen wurden die nachfolgend beschriebenen Produkte verwendet.

Komponente A

A₁ ein Polystyrol mit einem Molekulargewicht (Gewichtsmittel) von 360 000; VZ = 119 ml/g

A₂ ein schlagfestes Polystyrol mit einem Polybutadiengehalt von 7,9 Gew.-%; mittlere Teilchengröße der Weichphase: 2,7 μm (Mittelwert: 50 Vol.-% der als Weichphase vorliegenden Kautschukpartikel liegen oberhalb dieses Wertes und 50 Vol.-% unterhalb dieses Wertes), enthaltend 0,12 Gew.-% eines sterisch gehinderten Phenols als Antioxydans und 2,3 Gew.-% Weißöl als Schmiermittel; VZ der Hartmatrix: 70 ml g.

Komponente B

B₁ Ein nach dem BASF-Gasphasenverfahren hergestelltes Polypropylen mit dem MFI (190/5) von 22 g/10 Min. und einem in Xylol bestimmten ataktischen Anteil von 3 Gew.-%.

B₂ Eine Mischung aus 90 Gew.-% eines nach dem BASF-Gasphasenverfahren hergestellten Polypropylens (atakt. Anteil: 3 Gew.-%) und 10 Gew.-% Talkum mit dem MFI (190/5) von 22 g/10 Min. Der Talkum besaß folgende Spezifikation:

Chemische Analyse:

61 % SiO₂, 30 % MgO, 1 % Fe₂O₃, 1 % Al₂O₃, 0,8 % CaO, 2,5 bis 5,0 % Glühverlust

Korngrößenverteilung:

96 % unter 40 μm )

91 % unter 30 μm )

75 % unter 20 μm )

41 % unter 10 μm )

mittlere Korngröße: 12 μm

Brechungsindex 1,54

Spez. Gewicht 2,75 g/ml

Schüttgewicht 460.490 g/l

B3 Eine Mischung aus 60 Gew.-% eines nach dem BASF-Gasphasenverfahren hergestellten Polypropylens (atakt. Anteil: 3 Gew.-%) und 40 Gew.-% Talkum mit dem MFI (190/5) von 5 g/10 Min. Spezifikation des Talkums, wie unter B₂ beschrieben.

Komponente C

C₁ Ein selektiv hydriertes Styrol-Butadien-Blockcopolymerisat mit einem Gesamtstyrolgehalt von 53 Gew.-%, Rest 47 % Butadien. Diese 53 Gew.-% Styrol sind aufgeteilt in 10 Gew.-% in Form von Blockpolystyrol und in 43 Gew.-%, die im Butadien statistisch verteilt sind. [Handelsname: ®Glissoviskal SG].

C₂ ein sternförmig verzweigtes polymodales Blockcopolymerisat mit 25 Gew.-% Styrol, 25 Gew.-% Butadien, VZ = 83 (0,5%ige in Toluol bei 25°C; analog DIN 53 726) hergestellt, wie in DE-OS 19 59 922 beschrieben; Handelsname ®K-Resin 03

C3 ein lineares Dienblockcopolymerisat, SBS, mit 30 Gew.-% Styrol und 70 Gew.-% Butadien, MGW ca. 100.000 (Handelsprodukt ®Cariflex TR 1101)

C₄ ein sternförmig verzweigtes polyenodales Blockcopolymerisat mit 40 Gew.-% Styrol und 60 Gew.-% Butadien. MG_GPC = 150 000. (Handelsprodukt: Finaprene 414).

Die Erfindung wird durch die nachfolgenden Beispiele und Vergleichsversuche näher erläutert. Die darin genannten Teile und Prozente beziehen sich, sofern nicht anders angegeben, auf das Gewicht.

Beispiele 1 bis 12 und Vergleichsversuche I bis VIII

Die in der Tabelle angegebenen Gew.-Teile der Komponenten Aₙ, Bₙ und Cₙ wurden in trockener Form mit zusätzlich jeweils 0,1 Teilen eines sterisch gehinderten Phenols als Antioxydans [®Irganox 1076] gemischt und auf zwei Doppelschneckenextrudern, z.B. ZSK-Typ von Werner & Pfleiderer, extrudiert. Der Mi-

5

schvorgang erfolgte dabei mittels einer Kombination aus einem Haupt-und einem Nebenextruder. Im Hauptextruder wurden $B_n$ und $C_n$, im Nebenextruder $A_n$ gefördert. Temperatur beider Extruder: 220°C. Aus dem getrockneten Granulat der Proben wurden die Formmassen für die Eigenschaftsprüfungen durch Spritzgießen hergestellt.

Den Werten der Tabelle ist zu entnehmen, daß Steifigkeit, Wärmeformbeständigkeit und Verarbeitungsschwindung deutlich verbessert werden, wenn die Polypropylen-Komponente noch Talkum enthält. Dies gilt sowohl für verschiedene Typen von Mischungsvermittlern ($C_1$ bis $C_4$) als auch für verschiedene Typen von Polystyrol ($A_1$ bzw. $A_2$).

| | Beispiele | | | | Vergleichsversuche | | | | Beispiele | | | | | | | | Vergleichsversuche | | | |
|---|---|---|---|---|---|---|---|---|---|---|---|---|---|---|---|---|---|---|---|---|
| | 1 | 2 | 3 | 4 | I | II | III | IV | 5 | 6 | 7 | 8 | 9 | 10 | 11 | 12 | V | VI | VII | VIII |
| $A_1$ | 0 | 0 | 0 | 0 | 0 | 0 | 0 | 0 | 47,5 | 0 | 45 | 0 | 47,5 | 0 | 45 | 0 | 47,5 | 0 | 45 | 0 |
| $A_2$ | 47,5 | 47,5 | 47,5 | 47,5 | 47,5 | 47,5 | 47,5 | 47,5 | 0 | 47,5 | 0 | 45 | 0 | 47,5 | 0 | 45 | 0 | 47,5 | 0 | 45 |
| $B_1$ | 0 | 0 | 0 | 0 | 47,5 | 47,5 | 47,5 | 47,5 | 0 | 0 | 0 | 0 | 0 | 0 | 0 | 0 | 47,5 | 47,5 | 45 | 45 |
| $B_2$ | 0 | 0 | 0 | 0 | 0 | 0 | 0 | 0 | 47,5 | 47,5 | 45 | 45 | 0 | 0 | 0 | 0 | 0 | 0 | 0 | 0 |
| $B_3$ | 47,5 | 47,5 | 47,5 | 47,5 | 0 | 0 | 0 | 0 | 0 | 0 | 0 | 0 | 47,5 | 47,5 | 45 | 45 | 0 | 0 | 0 | 0 |
| $C_1$ | 5 | 0 | 0 | 0 | 5 | 0 | 0 | 0 | 5 | 5 | 10 | 10 | 5 | 5 | 10 | 10 | 5 | 5 | 10 | 10 |
| $C_2$ | 0 | 5 | 0 | 0 | 0 | 5 | 0 | 0 | 0 | 0 | 0 | 0 | 0 | 0 | 0 | 0 | 0 | 0 | 0 | 0 |
| $C_1$ | 0 | 0 | 5 | 0 | 0 | 0 | 5 | 0 | 0 | 0 | 0 | 0 | 0 | 0 | 0 | 0 | 0 | 0 | 0 | 0 |
| $C_4$ | 0 | 0 | 0 | 5 | 0 | 0 | 0 | 5 | 0 | 0 | 0 | 0 | 0 | 0 | 0 | 0 | 0 | 0 | 0 | 0 |
| EM ($N/mm^2$) | 1790 | 2480 | 1910 | 1640 | 1080 | 1590 | 1090 | 1140 | 1770 | 1250 | 1140 | 780 | 2630 | 1790 | 1820 | 1230 | 1410 | 1050 | 940 | 630 |
| VST/B (°C) | 77 | 89 | 81 | 80 | 75 | 84 | 77 | 78 | 81 | 70 | 66 | 51 | 84 | 77 | 69 | 60 | 74 | 69 | 57 | 45 |
| VS (%) | 0,8 | 0,7 | 0,8 | 0,8 | 1,1 | 1,2 | 1,2 | 1,2 | 0,7 | 0,8 | 0,7 | 0,8 | 0,7 | 0,9 | 0,6 | 0,8 | 1,0 | 1,2 | 1,1 | 1,2 |

0 289 926

## Ansprüche

1. Thermoplastische Formmasse, enthaltend, jeweils bezogen auf die Formmasse aus A + B + C,
A 30 bis 60 Gew.-% mindestens eines Styrols oder eines substituierten Styrols enthaltenden Polymerisates
B 30 bis 60 Gew.-% mindestens eines Homo-oder Copolymerisates eines α-Olefinmonomeren
C 2 bis 20 Gew.-% mindestens eines Styrols und Butadiens oder Isoprens enthaltenden Blockcopolymerisates, das gegebenenfalls selektiv hydriert sein kann,
dadurch gekennzeichnet, daß die Komponente B zusätzlich 5 bis 60 Gew.-%, bezogen auf B, Talkum als Füllstoff enthält.

2. Thermoplastische Formmassen, bestehend aus den Komponenten A, B und C.

3. Thermoplastische Formmasse nach Anspruch 1, enthaltend, bezogen auf 100 Teile A + B + C, 0,05 bis 25 Gew.-Teile übliche Zusatzstoffe.

4. Thermoplastische Formmasse nach Anspruch 1, enthaltend, jeweils bezogen auf die Formmassen aus A + B + C,
A 30 bis 60 Gew.-% mindestens eines Styrol oder eines substituierten Styrols enthaltenden Polymerisates
B 30 bis 60 Gew.-% mindestens eines Homo-oder Copolymerisates eines α-Olefinmonomeren
C 2 bis 20 Gew.-% mindestens eines linearen, selektiv hydrierten Styrol und Butadien enthaltenden Blockcopolymerisates, wobei dessen Gesamtstyrolgehalt im Bereich von 40 bis 60 Gew.-%, bezogen auf C, liegt und 5 bis 25 Gew.-% als Blockpolystyrol vorliegen und der Rest des Styrols in 60 bis 40 Gew.-% Butadien statistisch eingebaut vorliegt und wobei ferner das Blockcopolymerisat C ein mittleres Molekulargewicht (Gewichtsmittel) von 50.000 bis 200.000 aufweist,
dadurch gekennzeichnet, daß die Komponente B zusätzlich 5 bis 60 Gew.-%, bezogen auf B, Talkum als Füllstoff enthält.

5. Formmasse nach Anspruch 1, dadurch gekennzeichnet, daß der Füllstoff ein Talkum ist, dessen mittlere Korngröße 5 bis 20 μm beträgt.

6. Formmasse nach Anspruch 5, dadurch gekennzeichnet, daß die mittlere Korngröße 10 bis 15 μm beträgt.

7. Verwendung der thermoplastischen Formmasse gemäß Anspruch 1 zur Herstellung von Formteilen.

8. Formteile aus Formmassen gemäß Anspruch 1.